# EUROPÄISCHE PATENTSCHRIFT

(11) **EP 2 115 836 B1**
(45) Veröffentlichungstag und Bekanntmachung des Hinweises auf die Patenterteilung: **04.08.2010**
(21) Anmeldenummer: 08708697.1
(22) Anmeldetag: 05.02.2008
(51) Int. Cl.: H02B 13/045

(54) **KAPSELUNGSABSCHNITT EINER GASISOLIERTEN HOCHSPANNUNGSANLAGE**
ENCAPSULATION SECTION FOR A GAS-INSULATED HIGH-VOLTAGE SYSTEM
SEGMENT D'ENCAPSULATION D'UNE INSTALLATION À HAUTE TENSION À ISOLATION GAZEUSE

(30) Priorität: 06.02.2007 DE 102007006729
(43) Veröffentlichungstag der Anmeldung: 11.11.2009
(73) Patentinhaber: Siemens Aktiengesellschaft, 80333 München (DE)
(72) Erfinder: KLEINSCHMIDT, Andreas, 16515 Oranienburg (DE); RAUTENBERG, Steffen, 12161 Berlin (DE); TIETZE, Jörg, 13591 Berlin (DE)
(86) Internationale Anmeldenummer: PCT/EP2008/051398
(87) Internationale Veröffentlichungsnummer: WO 2008/095929

(56) Entgegenhaltungen:
- DE-C1- 19 815 151
- DE-U1- 8 714 673
- DE-U1- 9 112 417
- DE-U1- 9 112 420
- FR-A- 2 598 776
- GB-A- 686 387

## Beschreibung

Die Erfindung betrifft einen Kapselungsabschnitt einer gasisolierten Hochspannungsanlage, die mindestens zwei entlang einer Achse nebeneinander angeordnete Kapselungsbausteine aufweist, wobei jeder Kapselungsbaustein mit je mindestens einem Anschlussflansch versehen ist und wobei zwischen zwei einander zugewandten Anschlussflanschen ein zumindest einseitig axialkraftübertragendes und dichtendes Ausgleichselement angeordnet ist.

Ein gattungsgemäßer Kapselungsabschnitt ist aus der DE 198 15 151 C1 bekannt. Bei gekapselten und gasisolierten Hochspannungsanlagen muss zum Ausgleich von Wärmeausdehnungen zwischen den verschiedenen Teilen der Hochspannungsanlage eine Möglichkeit zum Verschieben in eine Achsrichtung vorgesehen werden. Ein bevorzugter Anwendungsfall sind dabei Sammelschienen von Hochspannungsschaltanlagen.

Die genannte Druckschrift zeigt eine Lösung, bei der ein Faltenbalg eingesetzt wird, der thermisch bedingte axiale Verschiebungen ausgleichen kann. Bekannt sind derartige Ausgleichselemente für thermische Spannungen auch unter der Bezeichnung Bördelkompensatoren.

Eine alternative Lösung stellt auf Schiebestücke ab, die zwischen zwei Kapselungsbausteinen eine relative Verschiebung zulassen und auf diese Weise thermisch bedingte Spannungen abbauen (sog. Schiebekompensatoren).

Der Erfindung liegt die Aufgabe zugrunde, eine Vorrichtung der eingangs genannten Art so fortzubilden, dass es möglich wird, mit geringerem Aufwand eine hinreichende Möglichkeit zum thermisch bedingten axialen Ausgleich zwischen zwei Kapselungsbausteinen zu schaffen. Die Vorrichtung soll dabei einfach aufgebaut sein, so dass sie preiswert hergestellt werden kann. Weiterhin soll sie einen möglichst geringen Bauraum einnehmen. Schließlich soll - was ebenfalls die Herstellkosten niedrig halten soll - die Montage der Anlage in einfacher Weise möglich sein.

Die Lösung dieser Aufgabe durch die Erfindung ist bei einem gattungsgemäßen Kapselungsabschnitt **dadurch gekennzeichnet, dass** das Ausgleichselement, das zwischen zwei Kapselungsbausteinen angeordnet ist, zwei Flanschabschnitte aufweist, von denen je einer mit einem Anschlussflansch direkt oder indirekt verbunden ist bzw. diesen direkt oder indirekt kontaktiert, wobei die beiden Flanschabschnitte über einen Verbindungsbereich miteinander verbunden sind und wobei zwischen den beiden Flanschabschnitten mindestens ein Federelement angeordnet ist, das zur Erzeugung einer Federkraft in Richtung der Achse geeignet ist.

Damit wird - wie noch im Detail zu sehen sein wird - eine gasdichte Verbindung der beiden Kapselungsbausteine möglich, wobei eine einfache und ausreichende Möglichkeit des Ausgleichs von thermischen Bewegungen in Achsrichtung möglich ist.

Eine erste Fortbildung der Erfindung sieht vor, dass die Flanschabschnitte parallel zueinander angeordnet sind und sich senkrecht zur Achse radial erstrecken.

Die Flanschabschnitte können ringförmig ausgebildet sein.

Ferner kann vorgesehen werden, dass der Verbindungsbereich im Radialschnitt zumindest teilweise kreisabschnittsförmig ausgebildet ist. Der Verbindungsbereich kann im Radialschnitt halbkreisförmig ausgebildet sein. Am Übergang zwischen den Flanschabschnitten und dem Verbindungsbereich können sich axial erstreckende und über den Umfang umlaufende Einprägungen eingebracht sein. Diese Einprägungen können im Radialschnitt einen bogenförmigen Verlauf aufweisen. Die Einprägungen beeinflussen die Bauteilsteifigkeit positiv.

Weiterhin kann vorgesehen werden, dass über den Umfang verteilt mehrere Federelemente zwischen den beiden Flanschabschnitten angeordnet sind. Die Federelemente können äquidistant über den Umfang der Flanschabschnitte verteilt angeordnet sein.

Das mindestens eine Federelement kann als mindestens eine Tellerfeder ausgeführt sein. Dabei kann vorgesehen werden, dass das mindestens eine Federelement als Tellerfederpaket ausgeführt ist.

Die Verbindung zwischen dem Ausgleichselement und den Anschlussflanschen kann durch eine Anzahl Schrauben hergestellt werden, die in Richtung der Achse ausgerichtet sind, d. h. die Schraubenlängsachse weist in Richtung der Achse. Mindestens eine Schraube kann dabei das mindestens eine Federelement durchsetzen. Zwischen dem Kopf der Schraube und einer vom Ausgleichselement abgewandten Auflagefläche des Anschlussflansches kann mindestens eine in Richtung der Achse wirkende Feder angeordnet sein. Die Feder kann eine Tellerfeder sein.

Eine weitere Fortbildung der Erfindung sieht vor, dass zwischen den beiden Anschlussflanschen weiterhin der Befestigungsflansch eines Isolators angeordnet ist, der als solcher bei gattungsgemäßen Vorrichtungen bekannt und gebräuchlich ist.

Die Anschlussflansche und der Verbindungsbereich können einstückig miteinander ausgebildet sein. Dabei können die Anschlussflansche und der Verbindungsbereich aus einem umgeformten Blechteil bestehen, was fertigungstechnische Vorteile zur Folge hat.

Schließlich kann vorgesehen werden, dass zwischen dem Flanschabschnitt des Ausgleichselements und dem Anschlussflansch bzw. dem Befestigungsflansch des Isolators ein Dichtungselement angeordnet ist. Das Dichtungselement kann ein O-Ring sein.

Die Kompensationsfähigkeit der Einrichtungen gemäß dem Stand der Technik liegt in einer Größenordnung, die normalerweise nicht benötigt wird. Die Fähigkeit der genannten Vorrichtungen zum Ausgleich axialer, thermisch bedingter Dehnungen liegt also meist weit über den auftretenden Dehnungen infolge der Erwärmung bzw. Abkühlung in der Sammelschiene. Weiterhin ist der bauliche Aufwand, der zur Herstellung der vorbekannten Einrichtungen getrieben werden muss, erheblich, so dass die Anlagen zumeist teuer sind. Die verwirklichte Möglichkeit, thermisch bedingten Ausgleich aufzunehmen, ist indes überdimensioniert. Aufgrund des Aufbaus der vorbekannten Einrichtungen wird auch ein nicht unerheblicher Bauraum benötigt, was nachteilig ist.

Dem gegenüber liefert das erfindungsgemäße Konzept Vorteile:

Die vorgeschlagene Lösung zeichnet sich dadurch aus, dass sie einen recht einfachen Aufbau hat und damit relativ kostengünstig realisiert werden kann. Die Möglichkeit, thermisch bedingte axiale Verschiebungen auszugleichen, ist dennoch absolut ausreichend.

Es ergibt sich damit eine einfache und kostengünstige Lösung.

Weiterhin beansprucht die vorgeschlagene Einrichtung in Form des gefederten Dehnungsrings im Vergleich mit vorbekannten Bördel- oder Schiebekompensatoren einen geringeren Einbauraum, was sich ebenfalls positiv bemerkbar macht.

Die Montage der dargestellten Vorrichtung ist auch sehr einfach möglich, so dass die diesbezüglichen Kosten gering bleiben.

Auf die Verwendung von Zugankern, wie sie bei den vorbekannten Bördel- oder Schiebekompensatoren üblich sind, kann bei der erfindungsgemäßen Ausgestaltung eines Kapselungsabschnitts verzichtet werden, da die notwendige elastische Schraubverbindung in die Behälterverschraubung integriert wurde. Die elastische Verschraubung ist im Vergleich mit den vorbekannten Zugankern vorteilhaft, da sie gleichmäßig am Flanschumfang verteilt wird. In vorteilhafter Weise können damit hochfeste und damit teure Werkstoffe und materialintensive Konstruktionen zur Befestigung der Zuganker vermieden werden.

Vorteilhaft ist schließlich, dass der gefederte Dehnungsring bei geeigneter Materialwahl neben einer freiluftfesten Kapselung auch die Funktion der Stromschienen (Gehäuserückstrom) übernehmen kann.

In der Zeichnung sind Ausführungsbeispiele der Erfindung dargestellt. Es zeigen:
Fig. 1 in perspektivischer Ansicht schematisch zwei miteinander verbundene Kapselungsbausteine mit einem Kapselungsabschnitt, wobei hier als Einbaubeispiel eine Sammelschiene einer Hochspannungsanlage gezeigt ist,
Fig. 2 schematisch den Radialschnitt durch einen Teil des Kapselungsabschnitts zwischen den beiden Kapselungsbausteinen,
Fig. 3 in vergrößerter Ansicht schematisch einen Teil eines Ausgleichselement im Radialschnitt, wie es bei der Hochspannungsanlage nach Fig. 1 bzw. 2 eingesetzt wird,
Fig. 4 schematisch das Grundteil des Ausgleichselements in einer ersten Ausführungsform und
Fig. 5 schematisch das Grundteil des Ausgleichselements in einer zweiten Ausführungsform, entsprechend derjenigen, die bei der Lösung gemäß der Figuren 2 und 3 dargestellt ist.

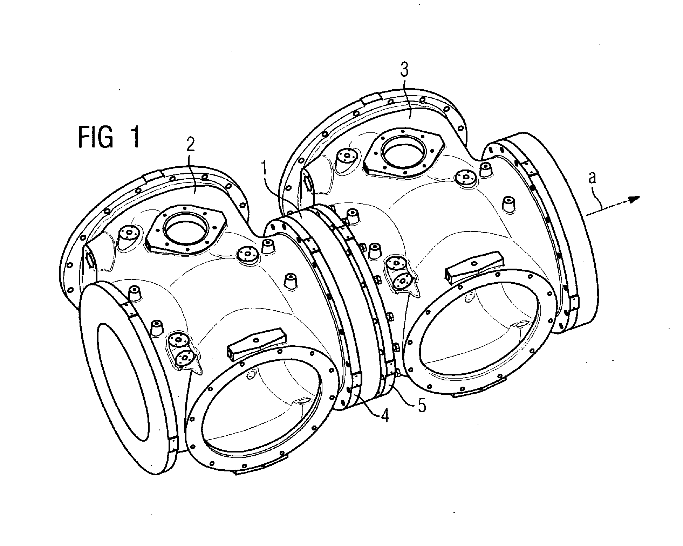

In Fig. 1 ist ein Teil einer Hochspannungsanlage dargestellt, nämlich einer Sammelschiene. Zu sehen sind zwei Kapselungsbausteine 2 und 3, die gasisoliert sind und die über einen Kapselungsabschnitt 1 miteinander gasdicht verbunden sind. Der Kapselungsabschnitt 1 stellt nicht nur eine gasdichte Verbindung zwischen den Kapselungsbausteinen 2, 3 sicher, mit ihm ist es auch möglich, thermische Verschiebungen zwischen den Teilen 2, 3 in Richtung der Achse a auszugleichen.

Der Kapselungsabschnitt 1 ist dabei zwischen zwei Anschlussflanschen 4 und 5 angeordnet, wobei je ein Anschlussflansch 4 bzw. 5 am Kapselungsbaustein 2 bzw. 3 an der Seite des Kapselungsbausteins 2, 3 angeordnet ist, an den der dargestellte Kapselungsabschnitt 1 angrenzt.

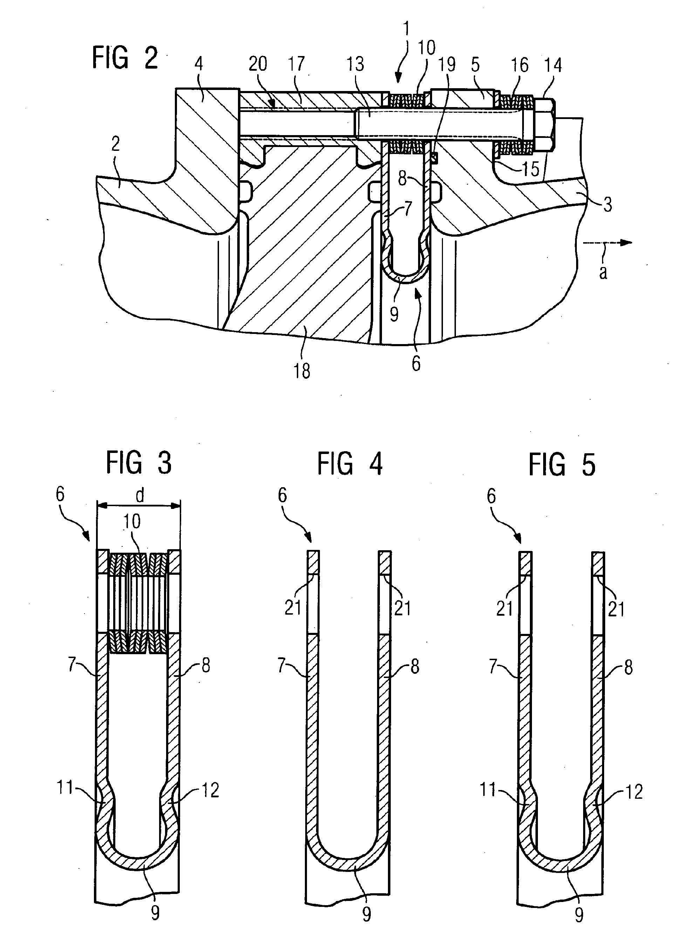

Details zum Aufbau des Kapselungsabschnitts 1 gehen aus Fig. 2 hervor.

Grundsätzlich ist - wie bereits erläutert - der Kapselungsabschnitt 1 zwischen den beiden Anschlussflanschen 4 und 5 der Kapselungsbausteine 2, 3 montiert. Zentraler Bestandteil des Kapselungsabschnitts 3 ist ein Ausgleichselement 6, das sowohl für den gasdichten Verbund der beiden Kapselungsbausteine 2, 3 als auch dafür sorgt, dass Wärmedehnungen zwischen den Kapselungsbausteinen 2, 3 in Achsrichtung a ausgeglichen werden können.

Das Ausgleichselement 6 ist als ringförmiges Teil ausgebildet, das im Radialschnitt die in Fig. 2 dargestellte Form hat. Das Ausgleichselement 6 weist zwei Flanschabschnitte 7 und 8 auf, die im axialen Abstand und parallel zueinander angeordnet sind und die sich radial erstrecken. Im radial inneren Endbereich sind die beiden Flanschabschnitte 7, 8 mittels eines Verbindungsbereichs 9 miteinander verbunden. Der Verbindungsbereich 9 weist dabei im Radialschnitt - wie aus Fig. 2 ersichtlich - eine im Wesentlichen halbkreisförmige Gestalt auf.

Nur schematisch und auch nur für einen Flanschabschnitt 8 ist angedeutet, dass ein Dichtungselement 19 (hier in Form eines O-Rings) vorgesehen sein kann, das dafür Sorge trägt, dass zwischen dem Anschlussflansch 4 bzw. 5 und dem Flanschabschnitt 7 bzw. 8 des Ausgleichselements 6 Gasdichtigkeit vorliegt, wenn das Ausgleichselement 6 zwischen die beiden Kapselungsbausteine 2, 3 montiert ist.

Damit in kompakter Weise die beiden Kapselungsbausteine 2, 3 in Richtung der Achse a mechanisch verbunden sind, sind zwischen den beiden Flanschabschnitten 7, 8 des Ausgleichselements 6 Federelemente 10 angeordnet, und zwar eine Anzahl solcher Federelemente äquidistant über den Umfang des Ausgleichselements verteilt. In Fig. 2 ist eines der Federelemente 10 dargestellt, wobei es als Tellerfederpaket ausgebildet ist. Wie bekannt, kann die Federsteifigkeit des Tellerfederpakets 10 durch die Anordnung der einzelnen Tellerfedern gewählt werden. Vorliegend sind die Telerfedern teilweise gestapelt positioniert, teilweise sind die Tellerfedern auch gegensinnig aneinandergesetzt.

Die axiale Ausgleichsbewegung in Richtung der Achse a wird unterstützt, indem über den Umfang verteilt Schrauben 13 vorgesehen sind, deren Kopf 14 mittelbar über eine Feder 16 auf eine Auflagefläche 15 des Anschlussflansches drückt. Als Feder 16 kommt auch hier ein Telerfederpaket zum Einsatz.

Die Schrauben 13 sind in einen Gewindeabschnitt 20 eingeschraubt, der in einen Befestigungsflansch 17 eingearbeitet ist. Dieser Befestigungsflansch 17 ist wiederum - was nicht dargestellt ist - mittels weiterer Schrauben mit dem Anschlussflansch 4 verschraubt. Der Befestigungsflansch 17 trägt einen Isolator 18, der häufig bei den erfindungsgegenständlichen Hochspannungsanlagen zum Einsatz kommt. Man kann also sagen, dass der Flanschabschnitt 7 des Ausgleichselements 6 nicht unmittelbar, sondern mittelbar am Anschlussflansch 4 des Kapselungsbausteins 2 anliegt.

Im montierten Zustand der in Fig. 2 dargestellten Anordnung ermöglichen die Federelemente 10 und die Federn 16 eine axiale Ausgleichsbewegung in Richtung der Achse a zwischen den beiden Kapselungsbausteinen 2 und 3. Dabei wird zwischen diesen Teilen Gasdichtigkeit zur Umgebung aufrecht erhalten.

In Fig. 3 sind nochmals einige Details des zum Einsatz kommenden Ausgleichselements 6 zu sehen, wie es eine bevorzugte Ausführungsform vorsieht.

Für den effektiven Abstand in Richtung der Achse a ist das Maß d entscheidend, das den lichten Abstand zwischen den beiden Flanschabschnitten 7, 8 des Ausgleichselements 6 definiert.

Im demontierten und entspannten Zustand kann der Abstand d beispielsweise 24 mm betragen. Wird das Ausgleichselement 6 montiert und liegt Raumtemperatur vor, kann sich der Abstand d auf einen Wert von beispielsweise 22 mm verkleinern, was durch das Vorspannen der Schrauben 13 bedingt ist.

Erreicht die Anordnung im Betrieb hohe Temperaturen, reduziert sich der Abstand d auf einen Wert von z. B. 21 mm. Kühlt die Hochspannungsanlage deutlich ab, kann der Abstand d auf beispielsweise 23 mm anwachsen.

Wärmebedingte Ausdehnungen zwischen den Kapselungsbausteinen 2, 3 können somit effektiv ausgeglichen werden.

In den Figuren 4 und 5 sind zwei mögliche Ausgestaltungen des Ausgleichselements 6 illustriert.

In Fig. 4 ist eine fertigungstechnisch einfache Lösung dargestellt, bei der die beiden Flanschabschnitte 7 und 8 mit dem dazwischen angeordneten Verbindungsbereich 9 eine im Radialschnitt U-förmige Kontur einnehmen. Im radial äußeren Bereich weisen die Flanschabschnitte 7, 8 eine Bohrung 21 auf, die zum Durchtritt der Schrauben 13 dient.

Die Lösung gemäß Fig. 5 unterscheidet sich insofern von derjenigen gemäß Fig. 4, als dass hier am Übergang zwischen den Flanschabschnitten 7, 8 und dem Verbindungsbereich 9 Einprägungen 11 bzw. 12 vorgesehen sind, die über den Umfang ringförmig umlaufen und das Bauteil versteifen. Die Einprägungen können durch einen separaten Arbeitsgang durch Umformen erzeugt werden. Die Gestalt des Ausgleichselements 6 kann hier - im Gegensatz zur U-Version gemäß Fig. 4 - als Ω-version bezeichnet werden.

Die vorgeschlagene Vorrichtung zum Ausgleich temperaturbedingter Ausdehnungen kann in gewisser Weise als Kombination des bekannten Bördelkompensatorprinzips mit dem Prinzip des Schiebekompensators bezeichnet werden. Das federnde Ausgleichselement übernimmt die Kompensation der Wärmedehnung, während die tellergefederten Schrauben für eine "atmungsaktive" Behälterverschraubung sorgen. Die zwischen den Schenkeln des U-Rings angeordneten Tellerfedern bewirken das dichtende Anliegen des Rings an den benachbarten Flanschen.

### Bezugszeichenliste

- 1: Kapselungsabschnitt
- 2: Kapselungsbaustein
- 3: Kapselungsbaustein
- 4: Anschlussflansch
- 5: Anschlussflansch
- 6: Ausgleichselement
- 7: Flanschabschnitt
- 8: Flanschabschnitt
- 9: Verbindungsbereich
- 10: Federelement
- 11: Einprägung
- 12: Einprägung
- 13: Schraube
- 14: Kopf der Schraube
- 15: Auflagefläche
- 16: Feder
- 17: Befestigungsflansch
- 18: Isolator
- 19: Dichtungselement (O-Ring)
- 20: Gewindeabschnitt
- 21: Bohrung

- a: Achse
- d: Abstand

## Patentansprüche

1. Kapselungsabschnitt (1) einer gasisolierten Hochspannungsanlage, die mindestens zwei entlang einer Achse (a) nebeneinander angeordnete Kapselungsbausteine (2, 3) aufweist, wobei jeder Kapselungsbaustein (2, 3) mit je mindestens einem Anschlussflansch (4, 5) versehen ist und wobei zwischen zwei einander zugewandten Anschlussflanschen (4, 5) ein zumindest einseitig axialkraftübertragendes und dichtendes Ausgleichselement (6) angeordnet ist,
**dadurch gekennzeichnet, dass** dass das Ausgleichselement (6) zwei Flanschabschnitte (7, 8) aufweist, von denen je einer mit einem Anschlussflansch (4, 5) direkt oder indirekt verbunden ist bzw. diesen direkt oder indirekt kontaktiert, wobei die beiden Flanschabschnitte (7, 8) über einen Verbindungsbereich (9) miteinander verbunden sind und wobei zwischen den beiden Flanschabschnitten (7, 8) mindestens ein Federelement (10) angeordnet ist, das zur Erzeugung einer Federkraft in Richtung der Achse (a) geeignet ist.

2. Kapselungsabschnitt nach Anspruch 1,
**dadurch gekennzeichnet, dass** die Flanschabschnitte (7, 8) parallel zueinander angeordnet sind und sich senkrecht zur Achse (a) radial erstrecken.

3. Kapselungsabschnitt nach Anspruch 1 oder 2,
**dadurch gekennzeichnet, dass** die Flanschabschnitte (7, 8) ringförmig ausgebildet sind.

4. Kapselungsabschnitt nach einem der Ansprüche 1 bis 3,
**dadurch gekennzeichnet, dass** der Verbindungsbereich (9) im Radialschnitt zumindest teilweise kreisabschnittsförmig ausgebildet ist.

5. Kapselungsabschnitt nach Anspruch 4,
**dadurch gekennzeichnet, dass** der Verbindungsbereich (9) im Radialschnitt halbkreisförmig ausgebildet ist.

6. Kapselungsabschnitt nach Anspruch 4 oder 5,
**dadurch gekennzeichnet, dass** am Übergang zwischen den Flanschabschnitten (7, 8) und dem Verbindungsbereich (9) sich axial erstreckende und über den Umfang umlaufende Einprägungen (11, 12) eingebracht sind.

7. Kapselungsabschnitt nach Anspruch 6,
**dadurch gekennzeichnet, dass** die Einprägungen (11, 12) im Radialschnitt einen bogenförmigen Verlauf aufweisen.

8. Kapselungsabschnitt nach einem der Ansprüche 1 bis 7,
**dadurch gekennzeichnet, dass** über den Umfang verteilt mehrere Federelemente (10) zwischen den beiden Flanschabschnitten (7, 8) angeordnet sind.

9. Kapselungsabschnitt nach Anspruch 8,
**dadurch gekennzeichnet, dass** die Federelemente (10) äquidistant über den Umfang der Flanschabschnitte (7, 8) verteilt angeordnet sind.

10. Kapselungsabschnitt nach einem der Ansprüche 1 bis 9,
**dadurch gekennzeichnet, dass** das mindestens eine Federelement (10) als mindestens eine Tellerfeder ausgeführt ist.

11. Kapselungsabschnitt nach Anspruch 10,
**dadurch gekennzeichnet, dass** das mindestens eine Federelement (10) als Tellerfederpaket ausgeführt ist.

12. Kapselungsabschnitt nach einem der Ansprüche 1 bis 11,
**dadurch gekennzeichnet, dass** die Verbindung zwischen dem Ausgleichselement (6) und den Anschlussflanschen (4, 5) durch eine Anzahl Schrauben (13) hergestellt ist, die in Richtung der Achse (a) ausgerichtet sind.

13. Kapselungsabschnitt nach Anspruch 12,
**dadurch gekennzeichnet, dass** mindestens eine Schraube (13) das mindestens eine Federelement (10) durchsetzt.

14. Kapselungsabschnitt nach Anspruch 12 oder 13,
**dadurch gekennzeichnet, dass** zwischen dem Kopf (14) der Schraube (13) und einer vom Ausgleichselement (6) abgewandten Auflagefläche (15) des Anschlussflansches (5) mindestens eine in Richtung der Achse (a) wirkende Feder (16) angeordnet ist.

15. Kapselungsabschnitt nach Anspruch 14,
**dadurch gekennzeichnet, dass** die Feder (16) eine Tellerfeder ist.

16. Kapselungsabschnitt nach einem der Ansprüche 1 bis 15,
**dadurch gekennzeichnet, dass** zwischen den beiden Anschlussflanschen (4, 5) weiterhin der Befestigungsflansch (17) eines Isolators (18) angeordnet ist.

17. Kapselungsabschnitt nach einem der Ansprüche 1 bis 16,
**dadurch gekennzeichnet, dass** die Anschlussflansche (4, 5) und der Verbindungsbereich (9) einstückig miteinander ausgebildet sind.

18. Kapselungsabschnitt nach Anspruch 17,
**dadurch gekennzeichnet, dass** die Anschlussflansche (4, 5) und der Verbindungsbereich (9) aus einem umgeformten Blechteil bestehen.

19. Kapselungsabschnitt nach einem der Ansprüche 1 bis 18,
**dadurch gekennzeichnet, dass** zwischen dem Flanschabschnitt (7, 8) des Ausgleichselements (6) und dem Anschlussflansch (4, 5) bzw. dem Befestigungsflansch (17) des Isolators (18) ein Dichtungselement (19) angeordnet ist.

20. Kapselungsabschnitt nach Anspruch 19,
**dadurch gekennzeichnet, dass** das Dichtungselement (19) ein O-Ring ist.

## Claims

1. An encapsulation section (1) in a gas-insulated high-voltage installation which has at least two encapsulation modules (2, 3) arranged next to one another along an axis (a), wherein each encapsulation module (2, 3) is provided with at least one respective connecting flange (4, 5) and wherein a compensating element (6) providing sealing and transferring axial force at least at one end is arranged between two connecting flanges (4, 5) which face one another,
**characterized in that**
the compensating element (6) has two flange sections (7, 8), a respective one of which is directly or indirectly connected to a connecting flange (4, 5) and makes direct or indirect contact therewith, wherein the two flange sections (7, 8) are connected to one another by means of a connecting region (9) and wherein the two flange sections (7, 8) have at least one spring element (10) arranged between them which is suitable for producing a spring force in the direction of the axis (a).

2. Encapsulation section according to Claim 1,
**characterized in that**
the flange sections (7, 8) are arranged parallel to one another and extend radially at right angles to the axis (a).

3. Encapsulation section according to Claim 1 or 2,
**characterized in that**
the flange sections (7, 8) are in annular form.

4. Encapsulation section according to one of Claims 1 to 3,
**characterized in that**
the connecting region (9) is in at least partial circular section form in radial section.

5. Encapsulation section according to Claim 4,
**characterized in that**
the connecting region (9) is in semicircular form in radial section.

6. Encapsulation section according to Claim 4 or 5,
**characterized in that**
axially extending impressions (11, 12) circulating over the periphery are made at the transition between the flange sections (7, 8) and the connecting region (9).

7. Encapsulation section according to Claim 6,
**characterized in that**
the impressions (11, 12) have an arcuate profile in radial section.

8. Encapsulation section according to one of Claims 1 to 7,
**characterized in that**
a plurality of spring elements (10) are arranged distributed over the periphery between the two flange sections (7, 8).

9. Encapsulation section according to Claim 8,
**characterized in that**
the spring elements (10) are arranged in an equidistant distribution over the periphery of the flange sections (7, 8).

10. Encapsulation section according to one of Claims 1 to 9,
**characterized in that**
the at least one spring element (10) is in the form of at least one cup spring.

11. Encapsulation section according to Claim 10,
**characterized in that**
the at least one spring element (10) is in the form of a cup-spring assembly.

12. Encapsulation section according to one of Claims 1 to 11,
**characterized in that**
the connection between the compensating element (6) and the connecting flanges (4, 5) is produced by a number of screws (13) which are oriented in the direction of the axis (a).

13. Encapsulation section according to Claim 12,
**characterized in that**
at least one screw (13) penetrates the at least one spring element (10).

14. Encapsulation section according to Claim 12 or 13,
**characterized in that**
at least one spring (16) acting in the direction of the axis (a) is arranged between the head (14) of the screw (13) and a bearing face (15) of the connecting flange (5) which is remote from the compensating element (6).

15. Encapsulation section according to Claim 14,
**characterized in that**
the spring (16) is a cup spring.

16. Encapsulation section according to one of Claims 1 to 15,
**characterized in that**
the two connecting flanges (4, 5) also have the mounting flange (17) of an insulator (18) arranged between them.

17. Encapsulation section according to one of Claims 1 to 16,
**characterized in that**
the connecting flanges (4, 5) and the connecting region (9) are in integral form with one another.

18. Encapsulation section according to Claim 17,
**characterized in that**
the connecting flanges (4, 5) and the connecting region (9) comprise a reshaped sheet-metal portion.

19. Encapsulation section according to one of Claims 1 to 18,
**characterized in that**
the flange section (7, 8) of the compensating element (6) and the connecting flange (4, 5) or the mounting flange (17) of the insulator (18) have a sealing element (19) arranged between them.

20. Encapsulation section according to Claim 19,
**characterized in that**
the sealing element (19) is an O-ring.

## Revendications

1. Segment ( 1 ) d'encapsulation d'une installation de haute tension isolée par du gaz, qui a au moins deux modules ( 2, 3 ) d'encapsulation disposés l'un à côté de l'autre le long d'un axe ( a ), chaque module ( 2, 3 d'encapsulation étant doté respectivement d'une bride ( 4, 5 ) de raccordement et un élément ( 6 ) de compensation, étanche et transmettant une force axiale au moins d'un côté, étant disposé entre deux brides ( 4, 5 ) de raccordement tournées l'une vers l'autre,
**caractérisé en ce que**
l'élément ( 6 ) de compensation a deux segments ( 7, 8 ) de bride dont l'un respectivement est relié directement ou indirectement à une bride ( 4, 5 ) de raccordement ou est en contact directement ou indirectement avec celle-ci, les deux segments ( 7, 8 ) de bride étant reliés entre eux par une partie ( 9 ) de liaison et entre les deux segments ( 7, 8 ) de bride est disposé au moins un élément ( 10 ) de ressort, qui est propre à produire une force élastique dans la direction de l'axe ( a ).

2. Segment d'encapsulation suivant la revendication 1,
**caractérisé en ce que**
les segments ( 7, 8 ) de bride sont disposés parallèlement entre eux et s'étendent radialement perpendiculairement à l'axe ( a ).

3. Segment d'encapsulation suivant la revendication 1 ou 2,
**caractérisé en ce que**
les segments ( 7, 8 ) de bride sont annulaires.

4. Segment d'encapsulation suivant l'une des revendication 1 à 3,
**caractérisé en ce que**
la partie ( 9 ) de liaison est au moins en partie en forme de segment de cercle en coupe radiale.

5. Segment d'encapsulation suivant la revendication 4,
**caractérisé en ce que**
la partie ( 9 ) de liaison est hémicirculaire en coupe radiale.

6. Segment d'encapsulation suivant la revendication 4 ou 5,
**caractérisé en ce que**
des empreintes ( 11, 12 ) s'étendant axialement et faisant le tour sur la périphérie sont ménagées à la transition entre les segments ( 7, 8 ) de bride et la partie ( 9 ) de liaison.

7. Segment d'encapsulation suivant la revendication 6,
**caractérisé en ce que**
les empreintes ( 11, 12 ) ont en coupe radiale un tracé en forme d'arc.

8. Segment d'encapsulation suivant l'une des revendications 1 à 7,
**caractérisé en ce que**
plusieurs éléments ( 10 ) à ressort répartis sur le pourtour sont disposés entre les deux segments ( 7, 8 ) de bride.

9. Segment d'encapsulation suivant la revendication 8,
**caractérisé en ce que**
les éléments ( 10 ) à ressort sont répartis de manière équidistante sur le pourtour des segments ( 7, 8 ) de bride.

10. Segment d'encapsulation suivant l'une des revendications 1 à 9,
**caractérisé en ce que**
le au moins un élément ( 10 ) à ressort est réalisé sous la forme d'au moins un ressort à disque.

11. Segment d'encapsulation suivant la revendication 10,
**caractérisé en ce que**
le au moins un élément ( 10 ) à ressort est réalisé sous la forme d'un paquet de ressorts à disque.

12. Segment d'encapsulation suivant l'une des revendications 1 à 11,
**caractérisé en ce que**
l'assemblage entre l'élément ( 6 ) de compensation et les brides ( 4, 5 ) de raccordement est produit par un certain nombre de vis ( 13 ), qui sont dirigées dans la direction de l'axe ( a ).

13. Segment d'encapsulation suivant la revendication 12,
**caractérisé en ce que**
au moins une vis ( 13 ) traverse le au moins un élément ( 10 ) à ressort.

14. Segment d'encapsulation suivant la revendication 12 ou 13,
**caractérisé en ce que**
au moins un ressort ( 16 ) agissant dans la direction de l'axe ( a ) est disposé entre la tête ( 14 ) de la vis ( 13 ) et une surface ( 15 ) d'appui de la bride ( 5 ) de raccordement, surface qui est éloignée de l'élément ( 6 ) de compensation.

15. Segment d'encapsulation suivant la revendication 14,
**caractérisé en ce que**
le ressort ( 16 ) est un ressort à disque.

16. Segment d'encapsulation suivant l'une des revendications 1 à 15,
**caractérisé en ce que**
un isolant ( 18 ) est disposé entre les deux brides ( 4, 5 ) de raccordement au-delà de la bride ( 17 ) de fixation.

17. Segment d'encapsulation suivant l'une des revendications 1 à 16,
**caractérisé en ce que**
les brides ( 4, 5 ) de raccordement et la partie ( 9 ) de liaison sont constituées entre elles d'une seule pièce.

18. Segment d'encapsulation suivant la revendication 17,
**caractérisé en ce que**
les brides ( 4, 5 ) de raccordement et la partie ( 9 ) de liaison sont constituées d'une pièce de tôle conformée.

19. Segment d'encapsulation suivant l'une des revendications 1 à 18,
**caractérisé en ce que**
un élément ( 19 ) d'étanchéité est disposé entre les segments ( 7, 8 ) de bride et l'élément ( 6 ) de compensation et la bride ( 4, 5 ) de raccordement ou la bride ( 17 ) de fixation de l'isolant ( 18 ).

20. Segment d'encapsulation suivant la revendication 19,
**caractérisé en ce que**
l'élément ( 19 ) d'étanchéité est un joint torique.
